# EUROPÄISCHE PATENTSCHRIFT

(11) **EP 0 791 501 B1**
(45) Veröffentlichungstag und Bekanntmachung des Hinweises auf die Patenterteilung: **02.10.2002**
(21) Anmeldenummer: 97101790.0
(22) Anmeldetag: 05.02.1997
(51) Int. Cl.: B60N 2/48

(54) **Fahrzeugsitz**
Vehicle seat
Siège de véhicule

(30) Priorität: 26.02.1996 DE 29603467 U
(43) Veröffentlichungstag der Anmeldung: 27.08.1997
(73) Patentinhaber: TRW Occupant Restraint Systems GmbH & Co. KG, 73551 Alfdorf (DE)
(72) Erfinder: Föhl, Artur, 73614 Schorndorf (DE)
(74) Vertreter: Degwert, Hartmut, Dipl.-Phys.

(56) Entgegenhaltungen:
- EP-A- 0 627 340
- WO-A-96/06752
- GB-A- 2 301 906
- US-A- 3 838 870

## Beschreibung

Die Erfindung betrifft einen Fahrzeugsitz mit einer an der Rückenlehne verstellbar angeordneten Kopfstütze, die bei einem Heckaufpral aus einer normalen Ausgangsstellung in eine an den Kopf des Insassen angenäherte Stellung bewegt wird.

Eine Kopfstütze verhindert unter anderem im Falle eines Heckaufpralls, daß der Kopf eines Fahrzeuginsassen relativ zum Fahrzeug nach hinten geschleudert wird. Üblicherweise sind Kopfstützen in die Rückenlehne einsteckbar und höhenverstellbar. Darüber hinaus gibt es auch Kopfstützen, die als verlängerter, fester Teil der Rückenlehne des Fahrzeugsitzes ausgebildet sind. Bei den zur Zeit in Fahrzeugen vorhandenen Kopfstützen sind, unabhängig, ob es sich um verstellbare oder nicht verstellbare Kopfstützen handelt, bei einem Heckaufprall die Halswirbel des Fahrzeuginsassen hohen Belastungen ausgesetzt, weil der Abstand des Kopfes zur Kopfstütze trotz Anlage des Rückens an der Rückenlehne verhältnismäßig groß sein kann (bis zu 160 mm).

Um diese Belastungen zu vermindern, wurde bereits vorgeschlagen, in der Kopfstütze einen kleinen Gassack unterzubringen. Im Kollisionsfall wird, gesteuert über einen Sensor, ein Gasgenerator aktiviert, der den Gassack innerhalb weniger Millisekunden füllt. Da jedoch der Abstand des Kopfes zum Gassack sehr stark differieren kann, würde beispielsweise bei einem sehr kurzen Abstand Kopf-Kopfstütze der Kopf vom Gassack sogar abgestoßen werden, was eine unerwünschte Belastung darstellt.

Es wurden auch Einrichtungen vorgeschlagen, welche im Kollisionsfall über Feder-Speicherenergie oder mittels Pyrotechnik über eine entsprechende Auslöseeinrichtung eine Abstützung für den Kopf derart nachführen, daß sie bei Kopfkontakt sofort in der jeweiligen Stellung verharrt. Für die Steuerung sind an der Oberfläche der Kopfabstützung entsprechende Sensoren angeordnet. Obwohl die so geschaffene Einrichtung im Versuch sehr positive Ergebnisse erzielt hat, wird sie aufgrund des mit ihr verbundenen hohen technischen Aufwandes nicht in Serie produziert.

Aus der EP-A-0 627 340 ist ein Fahrzeugsitz der eingangs genannten Art bekannt, bei dem eine in die Rückenlehne des Fahrzeugsitzes integrierte Aufprallplatte vorgesehen ist, die mit den zwei Lagerstangen verbunden ist, auf denen die Kopfstütze aufgebracht ist. Die Aufprallplatte ist mit den Lagerstangen schwenkbar an einem Querträger gelagert. Bei einem Heckaufprall wird unter Einwirkung des Körpergewichts des Fahrzeuginsassen die unterhalb des Querträgers angeordnete Aufprallplatte nach hinten gedrückt, so daß sich die oberhalb des Querträgers angeordnete Kopfstütze auf den Kopf des Insassen zubewegt.

Aufgabe der Erfindung ist es, einen kostengünstig herstellbaren Fahrzeugsitz mit einer Kopfstütze zu schaffen, der die bei einem Heckaufprall auf den Kopf und den Nackenbereich einwirkenden Kräfte reduziert. Gelöst wird diese Aufgabe durch einen Fahrzeugsitz der eingangs genannten Art mit den kennzeichnenden Merkmalen des Anspruchs 1. Für die Verlagerung der Kopfstütze zum Kopf des Insassen hin wird gemäß dem der Erfindung zugrunde liegenden Gedanken die Massenträgheit eines mit der Kopfstütze gekoppelten Masse körpers genutzt. Durch diesen Masse körper wird das Gesamtgewicht des Fahrzeugsitzes nur unwesentlich vergrößert; gegenüber aktiven Lösungen der oben angegebenen Art, beispielsweise unter Verwendung eines Federkraftspeichers, ergeben sich keine Gewichtsnachteile.

Die Erfindung kann grundsätzlich in zwei Varianten realisiert werden. Gemäß der ersten Ausführungsform ist die Kopfstütze um eine horizontale Achse verschwenkbar, wobei ihr Schwerpunkt unterhalb dieser Achse liegt. Die Kopfstütze wirkt dann wie ein zweiarmiger Hebel, an dessen unterem Hebelarm ein in die Kopfstütze integrierter Massekörper angreift. Der obere Hebelarm, der wesentlich länger ist als der untere, wird durch den Hauptkörper der Kopfstütze gebildet.

Bei der zweiten Ausführungsform ist die Kopfstütze translatorisch verschiebbar, und ein gesonderter Massekörper ist über ein zweiarmiges, um eine horizontale Achse schwenkbares Umlenkelement an die Kopfstütze angekoppelt. Das schwenkbare Umlenkelement wirkt als zweiarmiger Hebel, dessen unteres Ende an den Massekörper und dessen oberes Ende an die Kopfstütze angekoppelt ist. Auch bei dieser Ausführungsform ist der obere Hebelarm wesentlich länger als der untere, so daß die Kopfstütze aus der Ausgangsstellung in die an den Kopf des Insassen angenäherte Stellung einen Bewegungshub ausführt, der wesentlich größer ist als der gleichzeitig durchlaufene Bewegungsweg des Massekörpers.

Bei anderen Ausführungsformen ist die Kopfstütze vorzugsweise in der an den Kopf des Insassen angenäherten Stellung durch eine Rücklaufsperre gesichert. Für diese Rücklaufsperre kommen verschiedene Ausführungen in Betracht, auf die bei der nun folgenden Beschreibung mehrerer Ausführungsformen der Erfindung näher eingegangen wird.

In der beigefügten Zeichnung zeigen:
- Fig. 1: eine teilweise geschnitten gezeigte schematische Seitenansicht einer ersten Ausführungsform des Fahrzeugssitzes in normaler Gebrauchsstellung;
- Fig. 2: eine entsprechende Ansicht bei einem Heckaufprall des Fahrzeugs;
- Fig. 3: eine Querschnittsansicht einer Rücklaufsperre, die durch ein federbelastetes Reibgesperre gebildet ist;
- Fig. 4: eine Querschnittsansicht einer Rücklaufsperre, die einen durch ihr eigenes Gewicht belasteten Klemmhebel aufweist;
- Fig. 5: eine Querschnittsansicht einer Rücklaufsperre, die bei Kopfkontakt mit der Kopfstütze automatisch aktiviert wird;
- Fig. 6: eine Querschnittsansicht einer Ausführungsform einer Rücklaufsperre, die durch einen Klinkenhebel und ein Verzahnungssegment gebildet ist;
- Fig. 7: eine Querschnittsansicht einer analogen Ausführungsform einer Rücklaufsperre, bei welcher der Klinkenhebel durch seine eigene Masse belastet ist;
- Fig. 8: eine Querschnittsansicht einer Ausführungsform der Rücklaufsperre, bei welcher der Klinkenhebel durch Massenträgheit aktiviert wird;
- Fig. 9: einen Querschnitt einer Kopfstütze des Fahrzeugsitzes nach einer zweiten Ausführungsform;
- Fig. 10: eine Schnittansicht entlang Linie X-X in Fig. 9;
- Fig. 11: eine Ausführungsvariante der obigen Ausführungsform im Querschnitt;
- Fig. 12: schematisch eine Rücklaufsperre, die als federbelastete Keilbremse ausgeführt ist; und
- Fig. 13: schematisch eine Rücklaufsperre mit Rastverzahnung.

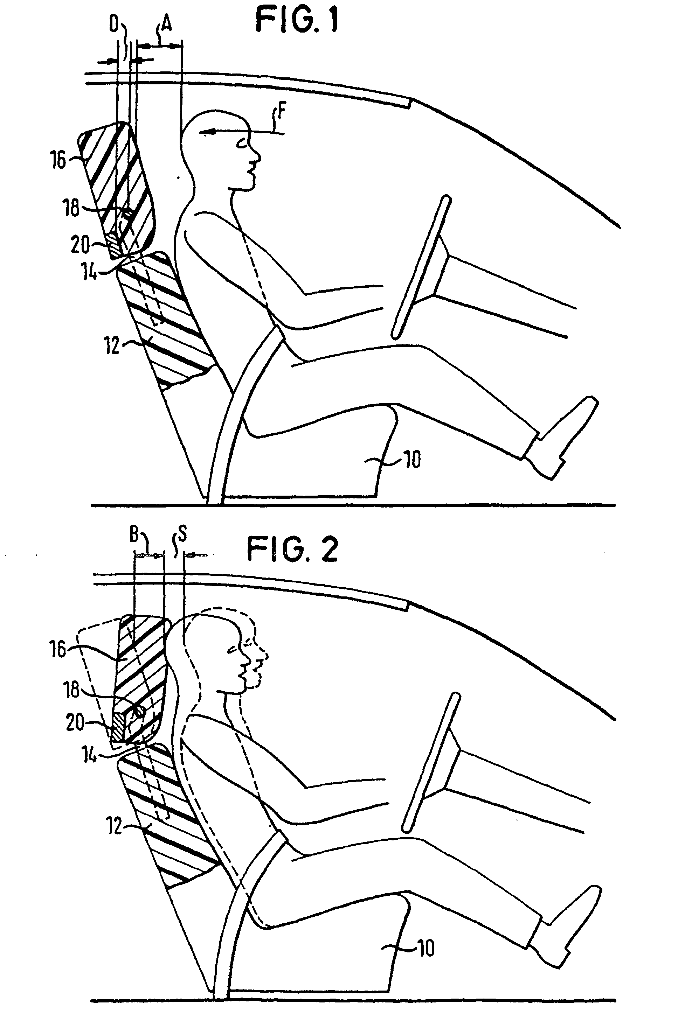

Der in den Figuren 1 und 2 gezeigte Fahrzeugsitz 10 ist mit einer herkömmlich ausgebildeten Rückenlehne 12 versehen, aus der nach oben zwei Lagerstangen 14 eines Lagerbügels herausragen, an dem eine Kopfstütze 16 schwenkbar gelagert ist. Mittels der in die Rückenlehne 12 eingeschobenen Lagerarme 14 ist die Kopfstütze 16 in üblicher Weise höhenverstellbar. Die Verschwenkung der Kopfstütze 16 erfolgt um eine Achse 18, die an den oberen Enden der Lagerstangen 14 angebracht ist. In den unteren, rückwärtigen Teil der Kopfstütze 16 ist ein Massekörper 20 integriert, der so groß bemessen ist, daß der Schwerpunkt der Kopfstütze 16 insgesamt unterhalb der Achse 18 gelegen ist. Die Kopfstütze 16 bildet so einen zweiarmigen Hebel, dessen unterer kürzerer Hebelarm mit dem Massekörper 20 gekoppelt ist und dessen oberer, längerer Hebelarm durch den Hauptkörper der Kopfstütze gebildet ist.

In der normalen, in Fig. 1 gezeigten Ausgangsstellung ist der Massekörper 20 gegenüber der Achse 18 um einen Abstand D zurückversetzt, wodurch die Kopfstütze 16 mit einem Moment beaufschlagt wird, das bestrebt ist, sie entgegen dem Uhrzeigersinn in die Ausgangslage gegen einen Anschlag zu verschwenken. Zwischen dem Kopf des Insassen und dem diesem gegenüberliegenden Teil der Kopfstütze 16 verbleibt im Normalfall ein Abstand A, der bis zu 160 mm betragen kann.

Bei einem Heckaufprall des Fahrzeugs wird der Kopf des Insassen in Richtung eines Pfeils F in Fig. 1 relativ zum Fahrzeugsitz rückwärts geschleudert. Durch die träge Masse des Massekörpers 20 wird nun aber auf die Kopfstütze 16 ein Moment ausgeübt, durch das diese im Uhrzeigersinn zum Kopf des Insassen hin verschwenkt wird. Die Kopfstütze gelangt so in eine an den Kopf des Insassen angenäherte Stellung, wie in Fig. 2 gezeigt, so daß die Kopfbewegung schon nach einer kurzen Bewegungsstrecke, die in Fig. 2 mit S bezeichnet ist, durch die Kopfstütze 16 angehalten wird. Die Kopfstütze 16 hat dann in dem Bereich, an dem der Kopf des Insassen zur Anlage kommt, eine Bewegungsstrecke B zurückgelegt. Gegenüber dem ursprünglichen Kopfabstand A ist die Bewegungsstrecke S stark reduziert, wodurch die Belastung des Insassen im Bereich der Halswirbel auf ein erträgliches Maß reduziert wird.

Die erfindungsgemäße Ausbildung des Fahrzeugsitzes erweist sich gegenüber aktiven Ausführungen, bei denen die Kopfstütze durch Fremdkraft, beispielsweise eine pyrotechnische Ladung, verstellt wird, nicht nur als einfacher und weniger aufwendig, sie hat demgegenüber auch funktionelle Vorteile. Während nämlich die Aktivierung eines mit gespeicherter Energie arbeitenden Verstellmechanismus einige Zeit beansprucht, erfolgt bei der erfindungsgemäßen Lösung die Verstellung der Kopfstütze unmittelbar bei Auftreten der durch den Heckaufprall verursachten Fahrzeugbeschleunigung. Bei einem Heckaufprall wird üblicherweise von einer mittleren Fahrzeugbeschleunigung von etwa 8 g ausgegangen. Ohne Verstellung der Kopfstütze würde der Kopf des Insassen mit einer Geschwindigkeit von 5 m/sec auf der Kopfstütze auftreffen. Bei einer angenommenen Kopfmasse von 6 kg und einem Dämpfungsweg an der Kopfstütze von etwa 30 mm erfährt der Kopf eine Belastung von etwa 2500 N. Bei dieser Belastung sind Verletzungen im Bereich der Halswirbel unvermeidbar.

Demgegenüber ergibt sich bei der erfindungsgemäßen Ausbildung des Fahrzeugsitzes eine erhebliche Verminderung der Belastung. Bei der in den Fig. 1 und 2 gezeigten Ausführungsform beträgt das Verhältnis der beteiligten Hebelarme etwa 1 : 3. Folglich wird bei Wirksamwerden der Trägheitskräfte die Kopfstütze zum Kopf des Insassen hin dreimal schneller verlagert als sich der gemeinsame Massenschwerpunkt der Kopfstütze in der entgegengesetzten Richtung bewegt. Der Kopf des Insassen trifft nach einer Strecke S von etwa 40 mm mit einer Geschwindigkeit von 2, 5 m/sec auf der Kopfstütze 16 auf. Bei einem wiederum angegnommenen Dämpfungsweg von 30 mm an der Kopfstütze beträgt die Belastung am Kopf nur noch 630 N. Es ergibt sich also eine Verminderung der Belastung um etwa 75 %. Auch die Belastung im Bereich der Halswirbel wird durch die auf ein Viertel reduzierte Bewegungsstrecke stark vermindert.

Ein weiterer Beitrag zur Verminderung der Belastung kann dadurch erreicht werden, daß die Polsterung der Kopfstütze wesentlich härter ausgebildet wird als die der Rückenlehne im Bereich der Schulterabstützung. Der Insasse kann daher tiefer in die Polsterung der Rückenlehne eindringen, wodurch sich der Abstand zwischen Kopf und Kopfstütze weiter reduziert. Von Vorteil ist bei dieser Ausbildung auch, daß der Massekörper 20 kleiner dimensioniert werden kann, so daß die Kopfstütze sanfter gegen den Kopf bewegt wird.

Die Kopfstütze 16 kann auch durch eine Rückstellfeder, durch einen Scherstift oder dergleichen in ihrer in Fig. 1 gezeigten Ausgangsstellung gehalten werden.

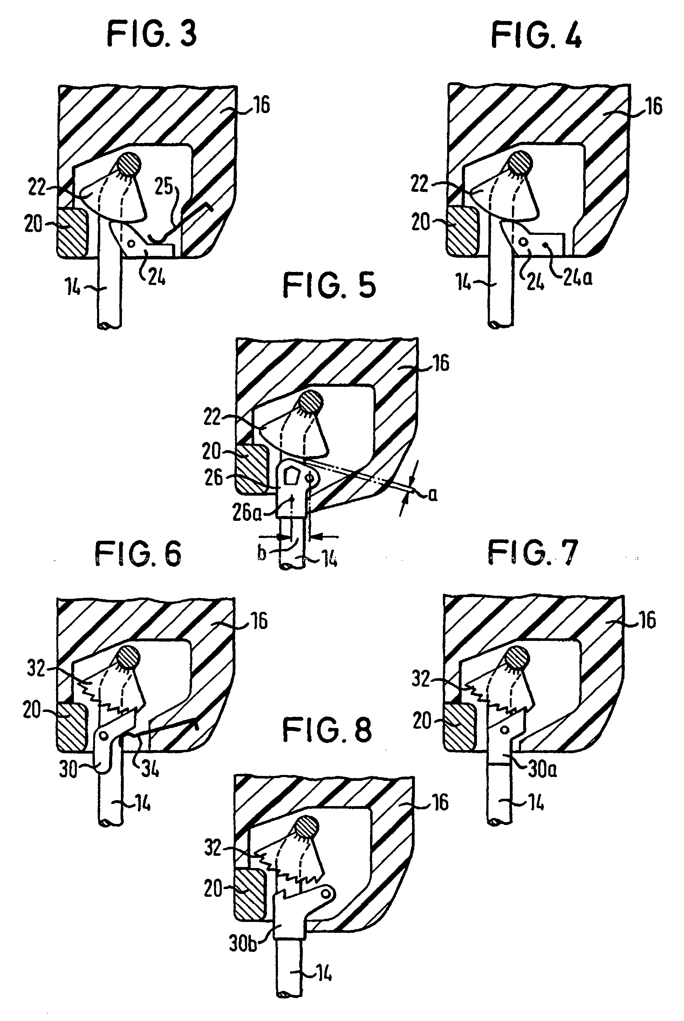

Die Kopfstütze muß in ihrer an den Kopf des Insassen angenäherten Stellung durch eine Rücklaufsperre gesichert werden. Verschiedene Ausführungen einer geeigneten Rücklaufsperre sind in den Fig. 3 bis 8 gezeigt.

Bei der in Fig. 3 gezeigten Ausführungsform besteht die Rücklaufsperre aus einem Reibgesperre mit einem am oberen Ende der Lagerarme 14 fest angebrachten Kurvenkörper 22 und einem schwenkbar an der Kopfstütze 16 gelagerten zweiarmigen Hebel 24, der durch eine Feder 25 in Reibeingriff mit der Oberfläche des Kurvenkörpers 22 gedrückt wird. Der federbelastete Hebelarm bildet zugleich eine Handhabe, durch deren Betätigung die Rücklaufsperre gelöst werden kann, um die Kopfstütze wieder in ihre Ausgangsstellung zurückzubringen.

Die in Fig. 4 gezeigte Ausführungsform unterscheidet sich von der nach Fig. 3 nur durch die Ausbildung des zweiarmigen Hebels 24, der hier nicht durch eine gesonderte Feder beaufschlagt wird, sondern durch sein Eigengewicht, das an seinem Schwerpunkt 24a angreift.

Bei der Ausführungsform nach Fig. 5 ist wiederum ein Kurvenkörper 22 vorgesehen, der beispielsweise als Segmentbogen ausgebildet und mit dem die Lagerstangen 14 verbindenden Bügelteil verschweißt ist. Mit dem Kurvenkörper 22 wirkt ein exzentrisch an der Kopfstütze 16 schwenkbar gelagerter Exzenterhebel 26 zusammen. In der normalen Ausgangsstellung hält der Exzenterhebel 26 einen geringen Abstand a von der Oberfläche des Kurvenkörpers 22 ein. Der Schwerpunkt 26a des Exzenterhebels 26 ist gegenüber der Schwenkachse um das Maß b versetzt. Durch diese Versetzung um das Maß b ergibt sich unter der Wirkung der Trägheitskräfte, die durch das Abbremsen der Kopfstütze 16 bei Berührung mit dem Kopf des Insassen erzeugt werden, ein Drehmoment, durch das der Exzenterhebel 26 gegen die Oberfläche des Kurvenkörpers 22 verschwenkt wird. Bei dieser Ausführungsform wird also die Rücklaufsperre erst bei Eintritt eines Heckaufpralls aktiviert.

Bei der in Fig. 6 gezeigten Ausführungsform besteht die Rücklaufsperre aus einem an der Kopfstütze 16 schwenkbar gelagerten Klinkenhebel 30 und einem am Lagerbügel der Kopfstütze starr angebrachten Sperrkörper 32, der mit einer Sperrverzahnung versehen ist. Durch eine Feder 34 wird der Klinkenhebel 30 mit der Sperrverzahnung in Eingriff gebracht. Bei dieser Ausführungsform ist die Kopfstütze 16 stufenweise verschwenkbar und wird in jeder Stufe der Schwenkbewegung arretiert. Durch Handbetätigung des Klinkenhebels 30 kann die Arretierung gelöst werden, um die Kopfstütze 16 in ihre Ausgangsstellung zurückzubewegen.

Analog zur Ausführungsform in Fig. 4 wird bei der in Fig. 7 gezeigten Ausführungsvariante der Klinkenhebel 30a nicht durch eine gesonderte Feder, sondern durch sein Eigengewicht beaufschlagt.

Schließlich zeigt Fig. 8 eine Ausführungsvariante, bei welcher der Klinkenhebel 30b analog der Ausführung nach Fig. 5 erst durch Massenträgheit beim Abbremsen der Kopfstütze 16 in Eingriff mit dem Sperrkörper 32 gelangt.

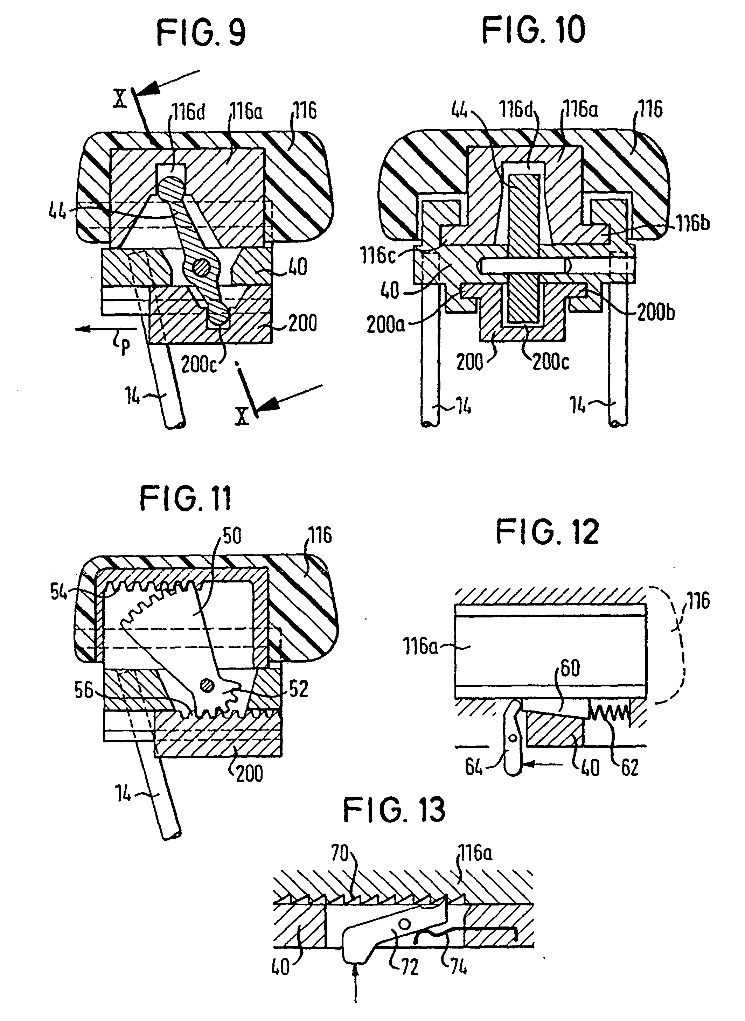

Bei der in den Fig. 9 und 10 gezeigten Ausführungsform ist die Kopfstütze 116 nicht verschwenkbar, sondern translatorisch verschiebbar. An den oberen Enden der Lagerstangen 14 ist ein Führungsteil 40 starr angebracht. Die Kopfstütze 116 ist an dem Führungsteil 40 gleitverschiebbar in Horizontalrichtung geführt. Zum Zweck der Führung ist der Kern 116a der Kopfstütze 116 mit seitlich abstehenden Leisten 116b, 116c versehen, die in Führungsnuten des Führungsteils 40 verschiebbar geführt sind. An der Unterseite des Führungsteils 40 ist eine entsprechend ausgebildete Führung für einen gesonderten Massekörper 200 ausgebildet, der ebenfalls mit seitlich abstehenden Führungsleisten 200a, 200b versehen ist. An dem Führungsteil 40 ist ferner ein Umlenkelement in Form eines zweiarmigen Umlenkhebels 44 schwenkbar gelagert. Der untere, wesentlich kürzere Helbelarm dieses Umlenkhebels 44 greift mit seinem ballig gerundeten Ende in eine Ausnehmung 200c des Massekörpers 200. Der obere, wesentlich längere Hebelarm greift mit seinem gleichfalls ballig gerundeten Ende in eine Ausnehmung 116d am Kern 116a der Kopfstütze 116 ein. Der Massekörper 200 ist somit durch den Umlenkhebel 44 an die Kopfstütze 116 angekoppelt.

Bei einem Heckaufprall wird der Massekörper 200 relativ im Fahrzeug rückwärts in Richtung eines Pfeiles P in Fig. 9 verlagert. Der Umlenkhebel 44 setzt den Bewegungshub des Massekörpers 200 in einen um das Verhältnis der Länge seiner Hebelarme vergrößerten, entgegengesetzt gerichteten Hub der Kopfstütze 116 um. Wie bei der zuvor beschriebenen Ausführungsform wird also die Kopfstütze 116 an den Kopf des Insassen angenähert.

Die Ausführungsform nach Fig. 11 unterscheidet sich von der nach den Fig. 9 und 10 nur durch die Ausbildung des Umlenkelements, das hier durch zwei starr miteinander gekoppelte und um eine horizontale Achse an der Kopfstütze 116 schwenkbar gelagerte Verzahnungssegmente 50, 52 gebildet ist. Die beiden Verzahnungssegmente 50, 52 bilden wiederum einen zweiarmigen Hebel, wobei der obere Hebelarm wesentlich länger ist als der untere. Das obere Verzahnungssegment 50 steht mit einer Zahnleiste 54 an der Kopfstütze 116 in Kämmeingriff, während das untere Verzahnungssegment 52 mit einer Zahnleiste 56 am Massekörper 200 in Kämmeingriff steht. Die Wirkungsweise stimmt mit der bei der zuvor beschriebenen Ausführungsform überein.

Auch bei den in den Fig. 9 bis 11 gezeigten Ausführungsformen mit translatorisch verschiebbarer Kopfstütze ist eine Rücklaufsperre erforderlich. Die Fig. 12 und 13 zeigen zwei Ausführungen einer Rücklaufsperre, die für eine translatorisch verschiebbare Kopfstütze geeignet ist.

Bei der Ausführungsform nach Fig. 12 wird an die Unterseite des Kerns 116a der Kopfstütze 116 ein keilförmiger Bremskörper 60 durch eine Druckfeder 62 angedrückt. Der Bremskörper 60 stützt sich auf eine Rampenfläche am Führungsteil 40 ab. Am Führungsteil 40 ist ferner ein zweiarmiger Lösehebel 64 schwenkbar gelagert. Der Lösehebel 64 drückt bei Handbetätigung seines unteren Endes mit seinem oberen Ende gegen den Bremskörper 60, wodurch dieser entgegen der Kraft der Druckfeder 62 in eine Freigabestellung bewegt werden kann, um die Kopfstütze 116 in ihre Ausgangsstellung zurückbewegen zu können.

Bei der Ausführungsform nach Fig. 13 ist an der Unterseite des Kerns 116a der Kopfstütze eine Sperrverzahnung 70 ausgebildet. Ein am Führungsteil schwenkbar gelagerter, zweiarmiger Klinkenhebel 72 wird duch eine Feder 74 in Sperreingriff mit der Sperrverzahnung 70 gehalten. Durch Handbetätigung des Klinkenhebels 72 kann die Verrastung gelöst werden.

## Patentansprüche

1. Fahrzeugsitz mit einer an der Rückenlehne (12) verstellbar angeordneten Kopfstütze (16; 116), die bei einem Heckaufprall aus einer normalen Ausgangsstellung in eine an den Kopf des Insassen angenäherte Stellung bewegt wird, **dadurch gekennzeichnet, daß** die Bewegung der Kopfstütze (16; 116) im wesentlichen alleine unter der Wirkung von Massekräften erfolgt, die aufgrund der Massenträgheit an einem gesonderten, eigens dafür vorgesehenen Massekörper (20; 200) auftreten, der an die Kopfstütze (16; 116) gekoppelt ist.

2. Fahrzeugsitz nach Anspruch 1, **dadurch gekennzeichnet, daß** die Kopfstütze (16) um eine horizontale Achse (18) verschwenkbar ist und ihr Schwerpunkt unterhalb dieser Achse (18) liegt.

3. Fahrzeugsitz nach Anspruch 1, **dadurch gekennzeichnet, daß** die Kopfstütze (116) translatorisch verschiebbar ist und der Massekörper (20) über ein zweiarmiges, um eine horizontale Achse schwenkbares Umlenkelement (44; 50, 52) an sie gekoppelt ist.

4. Fahrzeugsitz nach einem der Ansprüche 1 bis 3, **dadurch gekennzeichnet, daß** die Kopfstütze (16; 116) aus der Ausgangsstellung in die an den Insassen angenäherte Stellung einen Bewegungshub ausführt, der wesentlich größer ist als der gleichzeitig durchlaufene Bewegungsweg des Massekörpers (20; 200).

5. Fahrzeugsitz nach Anspruch 2, **dadurch gekennzeichnet, daß** die Achse (18) an einem Lagerbügel (14) gebildet ist, der aus der Rückenlehne (12) herausragt.

6. Fahrzeugsitz nach Anspruch 2 oder 5, **dadurch gekennzeichnet, daß** die Kopfstütze (16) einen zweiarmigen Hebel bildet, dessen oberer Hebelarm wesentlich länger ist als der untere, und daß der Massekörper (20) in die Kopfstütze (16) integriert und an den unteren Hebelarm angekoppelt ist.

7. Fahrzeugsitz nach Anspruch 3, **dadurch gekennzeichnet, daß** die Kopfstütze (116) gleitverschiebbar an einem Führungsteil (40) gelagert ist, an dem auch der Massekörper (200) gleitverschiebbar geführt und das Umlenkelement (44) schwenkbar gelagert ist.

8. Fahrzeugsitz nach Anspruch 7, **dadurch gekennzeichnet, daß** der obere, kraftschlüssig an der Kopfstütze (116) angeschlossene Hebelarm des Umlenkelements (44) wesentlich länger ausgebildet ist als der untere, kraftschlüssig an dem Massekörper (200) angreifende Hebelarm.

9. Fahrzeugsitz nach Anspruch 8, **dadurch gekennzeichnet, daß** das Umlenkelement (44) einen zweiarmigen Schwenkhebel bildet, der an beiden Enden ballig verrundet ist, wobei das obere Ende in eine Ausnehmung (116d) der Kopfstütze (116) und das untere in eine Ausnehmung (200c) des Massekörpers (200) eingreift.

10. Fahrzeugsitz nach Anspruch 8, **dadurch gekennzeichnet, daß** das Umlenkelement durch zwei starr miteinander gekoppelte, um die horizontale Achse schwenkbare Verzahnungssegmente (50, 52) gebildet ist, von denen das obere (50), mit einer Zahnleiste (54) an der Kopfstütze (116) in Kämmeingriff stehende Verzahnungssegment wesentlich größer ausgebildet ist als das untere (52), welches mit einer Zahnleiste (56) an dem Massekörper (200) in Kämmeingriff steht.

11. Fahrzeugsitz nach einem der Ansprüche 7 bis 10, **dadurch gekennzeichnet, daß** das Führungsteil (40) an zwei aus der Rückenlehne (12) herausragenden Lagerarmen (14) befestigt ist.

12. Fahrzeugsitz nach einem der vorstehenden Ansprüche, **dadurch gekennzeichnet, daß** die Kopfstütze (16; 116) durch Federkraft in die Ausgangsstellung belastet ist.

13. Fahrzeugsitz nach einem der vorstehenden Ansprüche, **dadurch gekennzeichnet, daß** die Kopfstütze (16; 116) durch ein abscherbares Halteelement in der Ausgangsstellung gehalten ist.

14. Fahrzeugsitz nach einem der vorstehenden Ansprüche, **dadurch gekennzeichnet, daß** die Kopfstütze (16; 116) härter gepolstert ist als die Rückenlehne (12) im Bereich der Schulterabstützung.

15. Fahrzeugsitz nach einem der vorstehenden Ansprüche, **dadurch gekennzeichnet, daß** die Kopfstütze (16; 116) in der an den Kopf des Insassen angenäherten Stellung durch eine Rücklaufsperre gesichert ist.

16. Fahrzeugsitz nach Anspruch 15, **dadurch gekennzeichnet, daß** die Rücklaufsperre durch ein Handbetätigungselement deaktivierbar ist.

17. Fahrzeugsitz nach Anspruch 15 oder 16, **dadurch gekennzeichnet, daß** die Rücklaufsperre durch die beim Abbremsen der Kopfstütze in ihrer an den Kopf des Insassen angenäherten Stellung auftretenden Trägheitskräfte aktivierbar ist.

18. Fahrzeugsitz nach einem der Ansprüche 15 bis 17, **dadurch gekennzeichnet, daß** die Rücklaufsperre einen außerhalb seines Schwerpunktes schwenkbar gelagerten Sperrhebel (18; 26; 30; 30a) aufweist.

19. Fahrzeugsitz nach einem der Ansprüche 15 bis 18, **dadurch gekennzeichnet, daß** die Rücklaufsperre einen schwenkbaren Sperrhebel (24: 18; 30) aufweist, der reibschlüssig oder formschlüssig an einem Sperrkörper (22; 32) angreift.

20. Fahrzeugsitz nach Anspruch 19, **dadurch gekennzeichnet, daß** der Sperrhebel (24; 18; 20; 30) an der Kopfstütze (16) gelagert und der Sperrkörper (22; 32) am Lagerbügel (14) der Kopfstütze angebracht ist.

## Claims

1. A vehicle seat with a back rest (12) and a headrest (16; 116) which is adjustably mounted on the back rest and which in a rear end vehicle collision is moved from a normal initial position to a position approached to the head of the occupant, **characterized in that** the movement of the headrest (16; 116) is effected substantially solely under the effect of inertial forces occurring due to mass inertia at a separate mass body (20; 200) which is provided specially for this purpose and is coupled to the headrest (16; 116).

2. The vehicle seat as set forth in claim 1, **characterized in that** the headrest (16) is adapted to swivel about a horizontal axis (18) and its center of gravity is located below this axis (18).

3. The vehicle seat as set forth in claim 1, **characterized in that** the headrest (116) is adapted to shift in translation and the mass body (20) is coupled thereto via a two-armed deflection element (44; 50, 52) adapted to swivel about a horizontal axis.

4. The vehicle seat as set forth in any of claims 1 to 3, **characterized in that** the headrest (16; 116) executes a travel from the initial position to the position approached to the occupant, this travel being substantially greater than the distance simultaneously travelled by the mass body (20; 200).

5. The vehicle seat as set forth in claim 2, **characterized in that** the axis (18) is formed at a mounting bracket (14) which protrudes from the back rest (12).

6. The vehicle seat as set forth in claim 2 or 5, **characterized in that** the headrest (16) forms a two-armed lever, the upper lever arm of which is substantially longer than the lower one, and that the mass body (20) is integrated in the headrest (16) and coupled to the lower lever arm.

7. The vehicle seat as set forth in claim 3, **characterized in that** the headrest (116) is mounted for sliding movement on a guide part (40), at which also the mass body (200) is guided for sliding movement and the deflection element (44) is swivellingly mounted.

8. The vehicle seat as set forth in claim 7, **characterized in that** the upper lever arm of the deflection element (44) connected to the headrest (116) for transmission of forces is configured substantially longer than the lower lever arm engaging the mass body (200) for transmission of forces.

9. The vehicle seat as set forth in claim 8, **characterized in that** the deflection element (44) forms a two-armed swivel lever which is barrel-rounded at both ends, the upper end thereof engaging a recess (116d) of the headrest (116) and the lower end thereof engaging a recess (200c) of the mass body (200).

10. The vehicle seat as set forth in claim 8, **characterized in that** the deflection element is formed by two rigidly coupled gear segments (50, 52) adapted to swivel about the horizontal axis, of which the upper gear segment (50) meshing with a rack (54) on the headrest (116) is configured substantially larger than the lower gear segment (52) which meshes with a rack (56) on the mass body (200).

11. The vehicle seat as set forth in any of claims 7 to 10, **characterized in that** the guide part (40) is secured to two mounting arms (14) protruding from the back rest (12).

12. The vehicle seat as set forth in any of the preceding claims, **characterized in that** the headrest (16; 116) is urged by spring force into the initial position.

13. The vehicle seat as set forth in any of the preceding claims, **characterized in that** the headrest (16; 116) is maintained in the initial position by a holding element adapted to be sheared off.

14. The vehicle seat as set forth in any of the preceding claims, **characterized in that** the headrest (16; 116) is upholstered harder than the back rest (12) in the region of the shoulder support.

15. The vehicle seat as set forth in any of the preceding claims, **characterized in that** the headrest (16; 116) is locked in the position approached to the occupant's head by a reverse travel inhibiting means.

16. The vehicle seat as set forth in claim 15, **characterized in that** the reverse travel inhibiting means is deactivatable by a manual actuating element.

17. The vehicle seat as set forth in claim 15 or 16, **characterized in that** the reverse travel inhibiting means is activatable by the forces of inertia occurring on deceleration of the headrest in its position approached to the occupant's head.

18. The vehicle seat as set forth in any of claims 15 to 17, **characterized in that** the reverse travel inhibiting means comprises a locking lever (18; 26; 30; 30a) swivellingly mounted outside of its center of gravity.

19. The vehicle seat as set forth in any of claims 15 to 18, **characterized in that** the reverse travel inhibiting means comprises a swivelling locking lever (24; 18; 30) which engages a locking member (22; 32) by friction action or with an interlocking fit.

20. The vehicle seat as set forth in claim 19, **characterized in that** the locking lever (24; 18; 20; 30) is mounted on the headrest (16) and the locking member (22; 32) is attached to the mounting bracket (14) of the headrest.

## Revendications

1. Siège de véhicule comprenant un appuie-tête (16 ; 116) monté réglable sur le dossier (12), qui en cas de choc à l'arrière est déplacé depuis une position initiale normale dans une position rapprochée de la tête de l'occupant, **caractérisé en ce que** le mouvement de l'appuie-tête (16 ; 116) a lieu sensiblement sous l'action seule de forces de masse qui sont produites en raison de l'inertie de masse sur un corps de masse distinct (20 ; 200) prévu spécialement à cet effet, qui est accouplé à l'appuie-tête (16; 116).

2. Siège de véhicule selon la revendication 1, **caractérisé en ce que** l'appuie-tête (16) peut pivoter autour d'un axe horizontal (18), et son centre de gravité est situé au-dessous de cet axe (18).

3. Siège de véhicule selon la revendication 1, **caractérisé en ce que** l'appuie-tête (116) peut être déplacé en translation, et le corps de masse (20) est accouplé à celui-ci par l'intermédiaire d'un élément d'inversion à deux bras (44 ; 50, 52) pouvant pivoter autour d'un axe horizontal.

4. Siège de véhicule selon l'une des revendications 1 à 3, **caractérisé en ce que** lors du passage depuis la position initiale dans la position rapprochée de l'occupant, l'appuie-tête (16 ; 116) exécute une course qui est nettement plus grande que le trajet parcouru simultanément par le corps de masse (20 ; 200).

5. Siège de véhicule selon la revendication 2, **caractérisé en ce que** l'axe (18) est réalisé sur un étrier d'appui (14) qui fait saillie hors du dossier (12).

6. Siège de véhicule selon la revendication 2 ou 5, **caractérisé en ce que** l'appuie-tête (16) forme un levier à deux bras dont le bras de levier supérieur est nettement plus long que le bras de levier inférieur, et **en ce que** le corps de masse (20) est intégré dans l'appuie-tête (16) et accouplé au bras de levier inférieur.

7. Siège de véhicule selon la revendication 3, **caractérisé en ce que** l'appuie-tête (116) est monté coulissant sur une partie de guidage (40) sur laquelle l'élément d'inversion (44) est monté pivotant.

8. Siège de véhicule selon la revendication 7, **caractérisé en ce que** le bras de levier supérieur de l'élément d'inversion (44), qui est raccordé par complémentarité de forces à l'appuie-tête, est réalisé nettement plus long que le bras de levier inférieur qui attaque le corps de masse (200) par complémentarité de forces.

9. Siège de véhicule selon la revendication 8, **caractérisé en ce que** l'élément d'inversion (44) forme un levier pivotant à deux bras qui présente un arrondi bombé aux deux extrémités, l'extrémité supérieure s'engageant dans un évidement (116d) de l'appuie-tête (116), et l'extrémité inférieure s'engageant dans un évidement (200c) du corps de masse (200).

10. Siège de véhicule selon la revendication 8, **caractérisé en ce que** l'élément d'inversion est formé par deux segments dentés (50, 52) accouplés entre eux de manière rigide et qui peuvent pivoter autour de l'axe horizontal, dont le segment denté supérieur (50), engrené avec une crémaillère (54) disposée sur l'appuie-tête (116), est réalisé nettement plus grand que le segment denté inférieur (52) qui est engrené avec une crémaillère (56) disposée sur le corps de masse (200).

11. Siège de véhicule selon l'une des revendications 7 à 10, **caractérisé en ce que** la partie de guidage (40) est fixée à deux bras de support (14) faisant saillie hors du dossier (12).

12. Siège de véhicule selon l'une des revendications précédentes, **caractérisé en ce que** l'appuie-tête (16 ; 116) est sollicité vers la position initiale par une force élastique.

13. Siège de véhicule selon l'une des revendications précédentes, **caractérisé en ce que** l'appuie-tête (16 ; 116) est maintenu en position initiale par un élément de maintien cisaillable.

14. Siège de véhicule selon l'une des revendications précédentes, **caractérisé en ce que** l'appuie-tête (16; 116) comporte un rembourrage plus dur que le dossier (12) dans la zone d'appui des épaules.

15. Siège de véhicule selon l'une des revendications précédentes, **caractérisé en ce que** dans la position rapprochée de la tête de l'occupant, l'appuie-tête (16 ; 116) est bloqué par un dispositif antiretour.

16. Siège de véhicule selon la revendication 15, **caractérisé en ce que** le dispositif antiretour peut être désactivé par un élément à actionnement manuel.

17. Siège de véhicule selon la revendication 15 ou 16, **caractérisé en ce que** le dispositif antiretour peut être activé par les forces d'inertie engendrées lors du freinage de l'appuie-tête dans sa position rapprochée de la tête de l'occupant.

18. Siège de véhicule selon l'une des revendications 15 à 17, **caractérisé en ce que** le dispositif antiretour présente un levier d'arrêt (18 ; 26 ; 30 ; 30a) monté pivotant en dehors de son centre de gravité.

19. Siège de véhicule selon l'une des revendications 15 à 17, **caractérisé en ce que** le dispositif antiretour présente un levier d'arrêt pivotant (24 ; 18 ; 30) qui agit sur un corps d'arrêt (22, ; 32) par liaison par frottement ou par complémentarité de formes.

20. Siège de véhicule selon la revendication 19, **caractérisé en ce que** le levier d'arrêt (24 ; 18 ; 20 ; 30) est monté sur l'appuie-tête (16) et le corps d'arrêt (22 ; 32) est monté sur l'étrier d'appui (14) de l'appuie-tête.
